# EUROPÄISCHE PATENTSCHRIFT

(11) **EP 3 317 558 B1**
(45) Veröffentlichungstag und Bekanntmachung des Hinweises auf die Patenterteilung: **26.05.2021**
(21) Anmeldenummer: 16716615.6
(22) Anmeldetag: 18.04.2016
(51) Int. Cl.: F16F 9/34, F16F 9/348, F16F 9/46

(54) **DÄMPFVENTIL**
DAMPING VALVE
SOUPAPE D'AMORTISSEMENT

(30) Priorität: 03.07.2015 DE 102015212535
(43) Veröffentlichungstag der Anmeldung: 09.05.2018
(73) Patentinhaber: ZF Friedrichshafen AG, 88046 Friedrichshafen (DE)
(72) Erfinder: PATZENHAUER, Andre, 53783 Eitorf (DE); WEBER, Johannes, 53809 Ruppichteroth (DE); WAGENKNECHT, Frank, 53783 Eitorf (DE); SCHMITZ, Klaus, 53783 Eitorf (DE); KIRSCHBAUM, Peter, 53567 Asbach (DE)
(74) Vertreter: ZF Friedrichshafen AG
(86) Internationale Anmeldenummer: PCT/EP2016/058474
(87) Internationale Veröffentlichungsnummer: WO 2017/005383

(56) Entgegenhaltungen:
- DE-A1- 2 612 469
- DE-A1- 3 015 596
- DE-A1- 3 149 378
- DE-A1-102007 017 683
- FR-A- 1 506 717
- GB-A- 2 090 644

## Beschreibung

Die Erfindung betrifft ein Dämpfventil gemäß dem Oberbegriff von Patentanspruch 1.

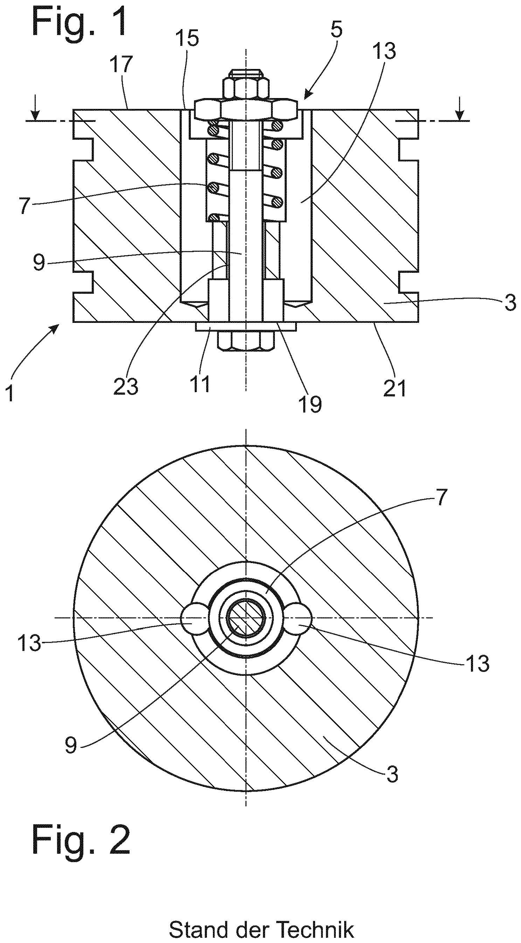

Die Fig. 1 zeigt einen Ausschnitt aus einem gattungsbildenden Dämpfventil 1 eines Schwingungsdämpfers. Ein Ventilkörper 3 verfügt über eine Stufenöffnung 5 zur Aufnahme einer Vorspannfeder 7, die auf eine Zugstange 9 wirkt, an der eine Ventilscheibe 11 angeordnet ist.

An die Stufenöffnung 5 ist achsparallel mindestens ein Strömungskanal 13 angeschlossen, der eine Einströmöffnung 15 an einer Ventilkörperseite 17 mit einer Ausströmöffnung 19 an einer gegenüberliegenden Ventilkörperseite 21 verbindet. Die Ausströmöffnung 19 wird von der besagten Ventilscheibe 11 zumindest teilverschlossen.

Der Stufenöffnung 5 schließt sich ein Führungskanal 23 für die Zugstange 9 an. Der Führungskanal 13 mündet in der Ausströmöffnung 19. Der Durchmesser des Führungskanals 23 ist vergleichsweise groß bemessen, so dass die Zugstange 9 eine gewisse Schiefstellung einnehmen kann. Diese Schiefstellung sorgt dafür, dass auf die Zugstange 9 eine gewisse Reibkraft einwirkt, die ein Schwingen der Zugstange 9 bei einer Ventilscheibenabhubbewegung verhindern soll.

Grundsätzlich besteht bei dieser Bauform der Vorteil, dass die Bereiche, in denen sich Gasblasen zwischen den Bauteilen, nämlich der Vorspannfeder 7, bilden können, unter einem höheren Druck stehen, als auf der Ausströmseite 19. Deshalb wirken sich Gaseinschlüsse im Dämpfmedium kaum auf die Dämpfkraft aus.

Aus der DE 1 037 209 C ist ein hydraulischer Stoßdämpfer bekannt, bei dem ein Ventilkörper einerseits von einer Federkraft in eine Schließposition vorgespannt wird und andererseits gegen eine Öffnungsbewegung des Ventilkörpers eine Dämpfkraft aufgebracht wird. Bei allen offenbarten Varianten ist die auf den Ventilkörper einwirkende Vorspannfeder auf der Niederdruckseite des Dämpfventils angeordnet, d. h. die Dämpfeinrichtung ist auf der Ausströmseite des Dämpfventils angeordnet.

Diese Bauform ist mit dem funktionalen Nachteil behaftet, dass im Dämpfmedium eingeschlossenes Gas auf der Niederdruckseite ausgasen und damit die Dämpfwirkung des Dämpfventils vermindern kann. In diesem Zusammenhang wäre auch noch die DE 26 12 469 A1 zu benennen.

Die Aufgabe der vorliegenden Erfindung besteht darin, eine Dämpffunktion der Ventilkörperbewegung unter Verzicht der Reibkraft auf die Zugstange zu erreichen.

Die Aufgabe wird durch die Merkmale des Patentanspruchs 1 gelöst.

Das bewährte Konzept der druckseitigen Anordnung der Vorspannfeder und der Einsatz einer Zugstange kann beibehalten bleiben. Der Ventilkörper ist räumlich getrennt von dem Verdränger, so dass beide Bauteile für die bestimmungsgemäße Funktion optimiert werden können.

Im Hinblick auf eine einfache Ausgestaltung wird der Verdränger von einer Scheibenanordnung gebildet. Eine Scheibe lässt sich z. B. mittels Stanzen extrem genau fertigen und führt damit zu einem präzisen Ringspaltquerschnitt, der u. a. die Dämpfkraft bestimmt.

Des Weiteren besteht die Option, dass die Scheibenanordnung ein Überdruckventil bildet. Das Scheibenventil kann z. B. derart ausgelegt werden, dass es bei niedrigen Temperaturen und geringer Viskosität des Dämpfmediums öffnet, um die Dämpfkraft auf die Ventilöffnungsbewegung zu begrenzen.

Optional kann der mindestens eine Strömungskanal außerhalb der Stufenöffnung verlaufen. Dadurch erreicht man eine eindeutige Trennung zwischen der Drosselkammer und der Ventilfunktion.

Um den Querschnitt der Austrittsöffnung freier gestalten zu können, verläuft mindestens eine Strömungskanal mindesten abschnittsweise schräg zur Zugstange. Der Querschnitt der Austrittsöffnung kann z. B. kleiner dimensioniert sein als ein Teilkreisdurchmesser, auf dem der Strömungskanal angeordnet ist.

Es besteht auch die Möglichkeit, dass der sich der Strömungskanal innerhalb eines Querschnittsbereichs der Stufenbohrung erstreckt und durch eine Ringwandung von der Drosselkammer getrennt ist. Diese Bauform lässt sich besonders einfach herstellen.

Bevorzugt wird die Ringwandung von einer Hülse gebildet. Dadurch kann der Zerspanungsaufwand am Ventilkörper minimiert werden.

In weiterer vorteilhafter Ausgestaltung ist zwischen einer zugstangenseitigen Stützfläche und dem Verdränger eine Übertragungshülse angeordnet ist. Dadurch vereinfacht sich z. B. die Bereitstellung eines Einströmquerschnitts in den Strömungskanal und die Verschiebewegübertragung der Zugstange auf den Verdränger.

Gemäß einem vorteilhaften Unteranspruch zentriert sich der Verdränger an der Ringwandung. Insbesondere dann, wenn die Ringwandung von einer Hülse gebildet wird, kann der Führungsdurchmesser mit wenig Aufwand präzise hergestellt werden, indem man z.B. ein Präzisionsrohrhalbzeug verwendet.

Man kann vorsehen, dass eine Stirnfläche der Ringwandung den Verschiebeweg der Zugstange soweit begrenzt, dass der axiale Bauraum für die Vorspannfeder länger ist als deren Blocklänge. Dadurch wird die Belastung der Vorspannfeder begrenzt und die Gestaltungsfreiheit bei der Dimensionierung der Vorspannfeder erweitert.

Anhand der folgenden Figurenbeschreibung soll die Erfindung näher erläutert werden.

Es zeigt:
- Figur 1: Dämpfventil gemäß dem Stand der Technik
- Figur 2: Querschnitt durch das Dämpfventil nach Fig. 1
- Fig. 3: Erfindungsgemäßes Dämpfventil
- Fig. 4: Detaildarstellung zur Fig. 3
- Fig. 5: Alternativausführung zur Fig. 3

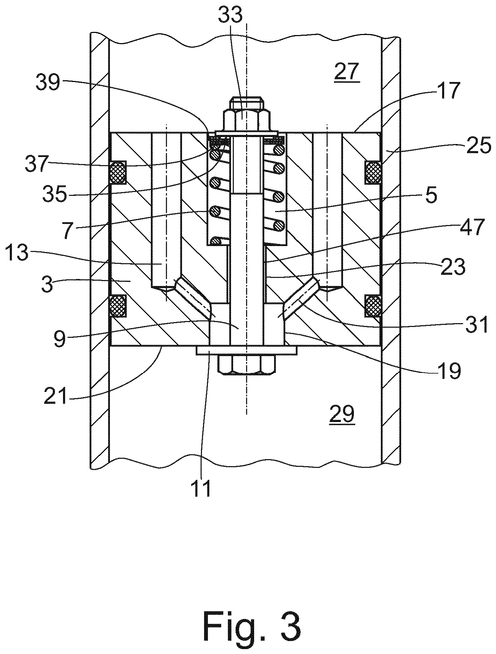

Die Figur 3 zeigt das erfindungsgemäße Dämpfventil 1, das in einem Zylinder 25 eines Schwingungsdämpfers eingesetzt wird. Das Dämpfventil 1 kann z. B. an einer axial beweglichen Kolbenstange oder als ortsfestes Dämpfventil ebenfalls zwischen zwei Arbeitsräumen 27; 29 verwendet werden.

In der Figur 3 ist die einfachste Bauform mit einer einzigen Durchströmungsrichtung dargestellt. Selbstverständlich kann das Dämpfventil 1 auch mehrere Einzelventile mit gegenläufigen Strömungsventilstangen aufweisen.

Das Dämpfventil 1 verfügt über den Ventilkörper, mit der Stufenöffnung 5 zur Aufnahme der Vorspannfeder 7, die auf die Zugstange 9 wirkt. Die Zugstange 9 durchdringt axial den Ventilkörper 3f Die Zugstange ist in dem Führungskanal 23 als Teil der Stufenöffnung 5 radial positioniert und kann gegen die Kraft der Vorspannfeder 7 eine Axialbewegung ausführen.

An der Zugstange 9 ist die Ventilscheibe 11 angeordnet. Angeordnet kann bedeuten, dass eine fliegende Lagerung oder auch beispielsweise eine einteilige Ausführung von Zugstange 9 und Ventilscheibe 11 vorliegt. Diese Ventilscheibe 11 verschließt zumindest teilweise die Ausströmöffnung 19 des mindestens eines Strömungskanals 13, der die zwei gegenüberliegenden Ventilkörperseiten 17; 21 miteinander verbindet. In der Fig. 3 sind zwei Strömungskanäle 13 dargestellt, die radial außerhalb der Stufenöffnung 5 verlaufen. Beide Strömungskanäle 13 verfügen über mindesten einen Abschnitt 31, der schräg zur Zugstange 9 verläuft und an die Ausströmöffnung 19 angeschlossen ist. Man kann auch vorsehen, dass der Strömungskanal 13 auf seiner gesamten Länge schräg zur Zugstange 9 ausgeführt ist.

An der Zugstange 9 ist ein Befestigungsmittel 33, z. B. eine Schraubmutter, angeordnet, an deren in Richtung der Stufenöffnung 5 weisen den Stützfläche 35 ein Verdränger 37 von der Vorspannfeder 7 gehalten wird.

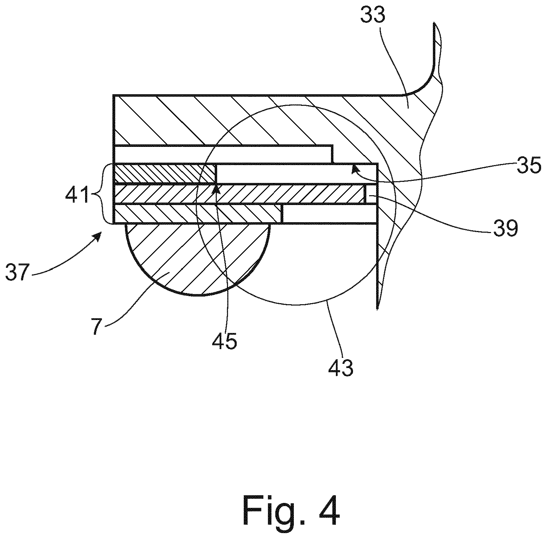

Wie die Fig. 4 zeigt, bildet der Verdränger 37 mit seinem Außendurchmesser einen Ringspalt 39 zur Innenwand der Stufenöffnung 5. Damit bilden der Verdränger 37 und die Stufenöffnung 5 eine Drosselkammer, wenn bei einer Axialbewegung der Zugstange 9 eine Verdrängerbewegung erfolgt und dabei Dämpfmedium und den Ringspalt 39 gedrückt wird.

Der Verdränger 37 wird von einer Scheibenanordnung 41 gebildet. Die Scheibenanordnung kann ein Ueberdruckventil 43 bilden, in dem es z.B. um einen Kipp-Punkt eine Abhubbewegung ausführt, und damit dem Ringspalt 39 hydraulisch parallel geschaltet ist.

Bei einer Anströmung aus einem Arbeitsraum 27 fließt das Dämpfmedium über den mindestens einen Strömungskanal 13 in Richtung der Ausströmöffnung 19 und übt eine Abhubkraft auf die Ventilscheibe 11 aus. Diese Abhubkraft wirkt als Zugkraft auf die Zugstange 9, die von der Vorspannfeder 7 in Schließrichtung der Ventilscheibe 11 vorgespannt wird.

Bei einer Abhubbewegung wird der Verdränger 37 bzw. die Scheibenanordnung 41 in die Drosselkammer bewegt. Der Ringspalt 39 zwischen der Scheibenanord-nung 41 und der Innenwandung der Drosselkammer ist größer als ein Führungs-spalt 47 zwischen der Zugstange 9 und dem Führungskanal 23. Folglich wird das Dämpfmedium aus der Drosselkammer in Richtung des Arbeitsraums 27 verdrängt. Sollte das Dämpfmedium eine geringe Viskosität aufweisen, dann kann das Überdruckventil 43 öffnen.

Sowohl die Abhub, wie auch die Schließbewegung unterliegen der Verdrängerfunktion und damit einer hydraulischen Gegenkraft, so dass eine Schwingbewegung der Ventilscheibe 11 ausgeschlossen ist.

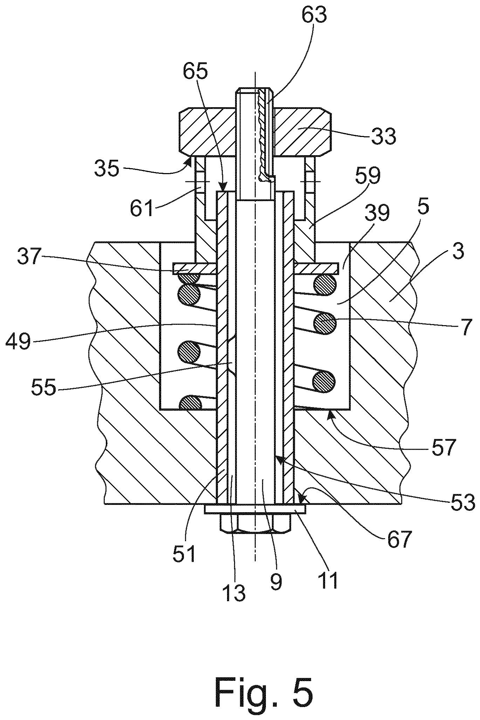

Die Fig. 5 beschreibt eine Alternatiwariante mit identischer Funktionsweise, bei sich der mindestens eine Strömungskanal 13 innerhalb eines Querschnittsbereichs der Stufenöffnung 5 erstreckt und durch eine Ringwandung 49 von der Drosselkammer getrennt ist. Der Ringraum zwischen der Ringwandung 49 und der Stufenöffnung 5 bildet die Drosselkammer. Beispielhaft wird die Ringwandung von einer separaten Hülse 51 gebildet, die in den Ventilkörper 3 eingepresst ist. Der Strömungskanal 13 wird dabei von der Innenwandung der Ringwandung 49 und einer Mantelfläche 53 der Zugstange 9 gebildet. Bei Bedarf kann die Zugstange radiale Führungsnocken 55 aufweisen, die an der Innenwandung der Hülse 51 gleiten und trotzdem einen Dämpfmediumstrom passieren lassen.

Wie auch in der Figur 3 stützt sich die Vorspannfeder 7 auf einem Boden 57 der Stufenöffnung ab und spannt den Verdränger 32 über eine Übertragungshülse 59 gegen die Stützfläche 35 der Zugstange 9 vor, wobei auch hier die Stützfläche 35 von dem Befestigungsmittel 33 gebildet wird.

Die Übertragungshülse 59 verfügt über mindestens eine Einlassöffnung 61 in Richtung zum Strömungskanal 13. Alternativ kann die Zugstange z. B. im Gewindebereich für das Befestigungsmittel über mindestens einen Axialkanal 63 verfügen, der einen permanenten Einlassquerschnitt bereitstellt.

Der Verdränger 37 zentriert sich an der Ringwandung 49 bzw. der Hülse 51. Dabei können der Verdränger 37 und die Übertragungshülse 59 einteilig ausgeführt sein. Dadurch kann die Gefahr der Schiefstellung des Verdrängers 37 aufgrund der größeren Führungslänge an der Ringwandung 49 minimiert werden.

Die Zugstange 9 ist stets länger als die Ringwandung 49. Eine endseitige Stirnfläche 65 der Ringwandung 49 begrenzt den Verschiebeweg der Zugstange 9 und damit auch den Abhubweg der Ventilscheibe 11 von einer Ventilsitzfläche 67, wobei der axiale Bauraum für die Vorspannfeder 7 innerhalb der Drosselkammer länger ist als die Blocklänge der Vorspannfeder 7.

Auch bei dieser Bauform kann der Verdränger ein Überdruckventil aufweisen, wie zur Fig. 3 beschrieben.

### Bezugszeichen

| | | | |
|---|---|---|---|
| 1 | Dämpfventil | 63 | Axialkanal |
| 3 | Dämpfkörper | 65 | Stirnfläche |
| 5 | Stufenöffnung | 67 | Ventilsitzfläche |
| 7 | Vorspannfeder | | |
| 9 | Zugstange | | |
| 11 | Ventilscheibe | | |
| 13 | Strömungskanal | | |
| 15 | Einströmöffnung | | |
| 17 | Ventilkörperseite | | |
| 19 | Ausströmseite | | |
| 21 | Ventilkörperseite | | |
| 23 | Führungskanal | | |
| 25 | Zylinder | | |
| 27 | Arbeitsraum | | |
| 29 | Arbeitsraum | | |
| 31 | Abschnitt | | |
| 33 | Befestigungsmittel | | |
| 35 | Stützfläche | | |
| 37 | Verdränger | | |
| 39 | Ringspalt | | |
| 41 | Scheibenanordnung | | |
| 43 | Überdruckventil | | |
| 45 | Kipp-Punkt | | |
| 47 | Führungsspalt | | |
| 49 | Ringwandung | | |
| 51 | Hülse | | |
| 53 | Mantelfläche | | |
| 55 | Führungsnocken | | |
| 57 | Boden | | |
| 59 | Übertragungshülse | | |
| 61 | Einlassöffnung | | |

## Patentansprüche

1. Dämpfventil (1), umfassend einen Ventilkörper (3) mit einer Stufenöffnung (5) zur Aufnahme einer Vorspannfeder (7), die auf eine Zugstange (9) wirkt, die in einem Führungskanal (23) als Teil der Stufenöffnung (5) radial positioniert ist und an der eine Ventilscheibe (11) angeordnet ist, die eine Ausströmöffnung (19) eines Strömungskanals (13), der zwei gegenüberliegende Ventilkörperseiten (17; 21) miteinander verbindet, zumindest teilweise verschließt, wobei auf die Zugstange (9) zusätzlich zur Vorspannfederkraft eine Dämpfkraft wirkt, die einer Schwingbewegung der Ventilscheibe (11) entgegenwirkt und bei einer Anströmung der Ventilscheibe (11) aus einem Arbeitsraum (27) eine Abhubkraft auf die Ventilscheibe (11) wirkt, **dadurch gekennzeichnet,**
**dass** die Zugstange (9) den Ventilkörper (3) axial durchdringt,
wobei die zusätzliche Dämpfkraft von einem zugstangenseitigen Verdränger (37) als Scheibenanordnung (41) gebildet wird,
der mit einem Abschnitt der Stufenöffnung (5) eine Drosselkammer bildet, wobei das Dämpfmedium aus der Drosselkammer in den Arbeitsraum (27) verdrängt wird und ein Ringspalt (39) zwischen der Scheibenanordnung (41) und der Innenwandung der Drosselkammer größer ist als ein Führungsspalt (47) zwischen der Zugstange (9) und dem Führungskanal (23),
wobei bei einer Abhubbewegung der Verdrängers bzw. der Scheibenanordnung (41) in die Drosselkammer bewegt und folglich Dämpfmedium aus der Drosselkammer in Richtung des Arbeitsraums (27) verdrängt wird,
wobei bei einem Dämpfmedium mit geringer Viskosität ein Überdruckventil (43) öffnen kann.

2. Dämpfventil nach Anspruch 1, **dadurch gekennzeichnet, dass** die Scheibenanordnung (41) ein Überdruckventil (43) bildet.

3. Dämpfventil nach Anspruch 1, **dadurch gekennzeichnet, dass** der mindestens eine Strömungskanal (13) außerhalb der Stufenöffnung (5) verläuft.

4. Dämpfventil nach Anspruch 3, 4- **dadurch gekennzeichnet, dass** der mindestens eine Strömungskanal (13) mindestens abschnittsweise schräg zur Zugstange (9) verläuft.

5. Dämpfventil nach Anspruch 1, **dadurch gekennzeichnet, dass** der sich der Strömungskanal (13) innerhalb eines Querschnittsbereichs der Stufenöffnung (5) erstreckt und durch eine Ringwandung (49) von der Drosselkammer getrennt ist.

6. Dämpfventil nach Anspruch 5, **dadurch gekennzeichnet, dass** die Ringwandung (49) von einer Hülse (51) gebildet wird.

7. Dämpfventil nach Anspruch 1, **dadurch gekennzeichnet, dass** zwischen einer zugstangenseitigen Stützfläche (35) und dem Verdränger (37) eine Übertragungshülse (59) angeordnet ist.

8. Dämpfventil nach Anspruch 6, **dadurch gekennzeichnet, dass** sich der Verdränger (37) an der Ringwandung (49) zentriert.

9. Dämpfventil nach Anspruch 6, **dadurch gekennzeichnet, dass** eine Stirnfläche (65) der Ringwandung (49) den Verschiebeweg der Zugstange (9) soweit begrenzt, dass der axiale Bauraum für die Vorspannfeder (7) länger ist als deren Blocklänge.

## Claims

1. Damping valve (1) comprising a valve body (3) with a stepped opening (5) for receiving a pretensioning spring (7) acting on a tension rod (9) which is positioned radially in a guide channel (23) as part of the stepped opening (5) and on which there is arranged a valve disc (11) which at least partially closes off an outflow opening (19) of a flow channel (13) which connects two opposite valve body sides (17; 21) to one another, wherein a damping force which counteracts a vibration movement of the valve disc (11) acts on the tension rod (9) in addition to the pretensioning spring force, and a lifting-off force acts on the valve disc (11) when a flow from the working chamber (27) impinges on the valve disc (11), **characterized**
**in that** the tension rod (9) extends through the valve body (3) in an axial direction,
wherein the additional damping force is formed by a tension rod-side displacement means (37) in the form of a disc arrangement (41)
which forms, with a section of the stepped opening (5), a throttle chamber, wherein the damping medium is displaced from the throttle chamber into the working chamber (27),
and an annular gap (39) between the disc arrangement (41) and the inner wall of the throttle chamber is larger than a guide gap (47) between the tension rod (9) and the guide channel (23),
wherein, during a lifting-off movement, the displacement means or the disc arrangement (41) is moved into the throttle chamber and damping medium is consequently displaced from the throttle chamber in the direction of the working chamber (27),
wherein, for a damping medium with low viscosity, an overpressure valve (43) can open.

2. Damping valve according to Claim 1,
**characterized in that** the disc arrangement (41) forms an overpressure valve (43).

3. Damping valve according to Claim 1, **characterized in that** the at least one flow channel (13) runs outside the stepped opening (5).

4. Damping valve according to Claim 3, **characterized in that** the at least one flow channel (13) runs, at least sectionally, obliquely with respect to the tension rod (9) .

5. Damping valve according to Claim 1, **characterized in that** the flow channel (13) extends within a cross-sectional region of the stepped opening (5) and is separated from the throttle chamber by an annular wall (49) .

6. Damping valve according to Claim 5, **characterized in that** the annular wall (49) is formed by a sleeve (51).

7. Damping valve according to Claim 1, **characterized in that** a transmission sleeve (59) is arranged between a tension rod-side supporting surface (35) and the displacement means (37).

8. Damping valve according to Claim 6, **characterized in that** the displacement means (37) is centred on the annular wall (49).

9. Damping valve according to Claim 6, **characterized in that** an end surface (65) of the annular wall (49) limits the displacement travel of the tension rod (9) to such an extent that the axial structural space for the pretensioning spring (7) is longer than the block length thereof.

## Revendications

1. Soupape d'amortissement (1) comprenant un corps de soupape (3) pourvu d'une ouverture à gradins (5) destinée à recevoir un ressort de précontrainte (7) qui agit sur une tige de traction (9) qui est positionnée radialement dans un conduit de guidage (23) faisant partie de l'ouverture à gradins (5) et sur laquelle est disposé un disque de soupape (11) qui ferme au moins partiellement une ouverture de sortie (19) d'un conduit d'écoulement (13) qui relie deux côtés opposés (17 ; 21) du corps de soupape l'un à l'autre, une force d'amortissement agissant sur la tige de traction (9) en plus de la force du ressort de précontrainte et s'opposant à un mouvement d'oscillation du disque de soupape (11) et une force de levage agissant sur le disque de soupape (11) lorsque le disque de soupape (11) est soumis à un afflux provenant d'un espace de travail (27), **caractérisée en ce que**
la tige de traction (9) pénètre axialement dans le corps de soupape (3),
la force d'amortissement supplémentaire étant générée par un déplaceur côté tige de traction (37) se présentant sous la forme d'un agencement de disques (41),
lequel déplaceur forme avec une portion de l'ouverture à gradins (5) une chambre d'étranglement, le milieu d'amortissement étant déplacé de la chambre d'étranglement jusque dans l'espace de travail (27) et un espace annulaire (39) ménagé entre l'agencement de disques (41) et la paroi intérieure de la chambre d'étranglement étant plus grand qu'un espace de guidage (47) ménagé entre la tige de traction (9) et le conduit de guidage (23),
lors d'un mouvement de levage, le déplaceur ou l'agencement de disques (41) étant déplacé jusque dans la chambre d'étranglement et par conséquent le milieu d'amortissement étant déplacé de la chambre d'étranglement en direction de l'espace de travail (27),
une soupape de surpression (43) pouvant s'ouvrir dans le cas d'un milieu d'amortissement présentant une faible viscosité.

2. Soupape d'amortissement selon la revendication 1, **caractérisée en ce que** l'agencement de disques (41) forme une soupape de surpression (43).

3. Soupape d'amortissement selon la revendication 1, **caractérisée en ce que** l'au moins un conduit d'écoulement (13) s'étend à l'extérieur de l'ouverture à gradins (5).

4. Soupape d'amortissement selon la revendication 3, **caractérisée en ce que** l'au moins un conduit d'écoulement (13) s'étend au moins par portions obliquement par rapport à la tige de traction (9).

5. Soupape d'amortissement selon la revendication 1, **caractérisée en ce que** le conduit d'écoulement (13) s'étend à l'intérieur d'une région en coupe transversale de l'ouverture à gradins (5) et est séparé de la chambre d'étranglement par une paroi annulaire (49) .

6. Soupape d'amortissement selon la revendication 5, **caractérisée en ce que** la paroi annulaire (49) est formée par un manchon (51).

7. Soupape d'amortissement selon la revendication 1, **caractérisée en ce qu'**un manchon de transmission (59) est disposé entre une surface d'appui côté tige de traction (35) et le déplaceur (37).

8. Soupape d'amortissement selon la revendication 6, **caractérisée en ce que** le déplaceur (37) est centré sur la paroi annulaire (49).

9. Soupape d'amortissement selon la revendication 6, **caractérisée en ce qu'**une surface frontale (65) de la paroi annulaire (49) limite la trajectoire de déplacement de la tige de traction (9) au point que l'espace de construction axial du ressort de précontrainte (7) est plus long que sa longueur de bloc.
